# EUROPÄISCHE PATENTSCHRIFT

(11) **EP 2 701 858 B1**
(45) Veröffentlichungstag und Bekanntmachung des Hinweises auf die Patenterteilung: **16.09.2015**
(21) Anmeldenummer: 12719897.6
(22) Anmeldetag: 04.04.2012
(51) Int. Cl.: B21B 37/62, B21B 37/64, H01M 4/04

(54) **WALZENANORDNUNG MIT EINER EINRICHTUNG ZUR REGELUNG DES WALZENSPALTES SOWIE VERFAHREN ZUR REGELUNG DES WALZENSPALTES IN EINER WALZENANORDNUNG**
ROLL ARRANGEMENT HAVING A DEVICE FOR REGULATING THE ROLL NIP, AND METHOD FOR REGULATING THE ROLL NIP IN A ROLL ARRANGEMENT
SYSTEME DE CYLINDRES DOTE D'UN DISPOSITIF DE REGLAGE DE LA FENTE DE LAMINAGE AINSI QUE PROCEDE DE REGLAGE DE LA FENTE DE LAMINAGE CHEZ UN SYSTEME DE CYLINDRES

(30) Priorität: 28.04.2011 DE 102011018874
(43) Veröffentlichungstag der Anmeldung: 05.03.2014
(73) Patentinhaber: Saueressig Gmbh + Co. KG, 48691 Vreden (DE)
(72) Erfinder: HACKFORT, Thomas, 48683 Ahaus-Altstütte (DE); WOLTERS, Kay, 48703 Stadtlohn (DE); WITTEBROCK, Heinz, 48683 Ahaus (DE); GOTTSZKY, Jörg, 48691 Vreden (DE)
(74) Vertreter: Angerhausen, Christoph
(86) Internationale Anmeldenummer: PCT/DE2012/000362
(87) Internationale Veröffentlichungsnummer: WO 2012/146226

(56) Entgegenhaltungen:
- WO-A1-2004/026498
- CN-B- 101 254 509
- CN-Y- 201 175 719
- JP-A- 2000 133 251

## Beschreibung

Die Erfindung betrifft eine Walzenanordnung mit einer Einrichtung zur Regelung des Walzenspaltes, umfassend ein Walzenpaar, das aus einer oberen Walze und einer unteren Walze besteht, zwischen denen ein Walzenspalt ausgebildet ist, wobei jede Walze mit zwei axial diametral gegenüberstehenden Walzenzapfen versehen ist, mindestens zwei Lagerblöcke für jeden Walzenzapfen, wobei in einem Lagerblock ein oder mehrere Lager aufgenommen sind, und einen auf dem Walzenzapfen jeweils außenliegenden Lagerblock in einer Spannbrille, die einen ersten Hebelarm und einen zweiten Hebelarm aufweist, wobei der zweite Hebelarm der jeweiligen Spannbrille der oberen Walze und der zweite Hebelarm der jeweiligen Spannbrille der unteren Walze über ein erstes Stellelement miteinander verbunden sind; einander entsprechende Lagersteine und Spannbrillen von oberer Walze und unterer Walze sich gegenüberstehen; und eine Steuerung, die auf das erste und das zweite Stellelement wirkt. Die Erfindung betrifft weiterhin ein Verfahren zur Regelung des Walzenspaltes in einer solchen Walzenanordnung. Eine derartige Vorrichtung und ein derartiges Verfahren sind aus der CN 101 254 509 A bekannt.

Es ist ein lange bestehendes Bedürfnis, eine Walzenanordnung mit einer Einrichtung zur Regelung des Walzenspaltes zur Verfügung zu stellen, bei der eine gleichmäßige Dicke der durch den Walzenspalt laufenden Warenbahn gewährleistet ist. Dies bedeutet im Wesentlichen, dass der Walzenspalt unabhängig von der herrschenden Linienbelastung konstant gehalten wird.

Aus der DE 16 02 019 A1 ist eine Walzenanordnung mit einer oder mit mehreren Druckvorrichtungen zur Konstanthaltung des Walzenspaltes bekannt. Walzenanordnung weist Einbaustücke für jeweilige Stützwalzen auf, an denen die Arbeitswalzen anliegen, welche wiederum in entsprechenden Einbaustücken gelagert sind. Die Einbaustücke für die Stützwalzen werden durch kleine Druckmittelzylinder abgefangen, die für den Regeldruck beim Walzen sorgen. Der während des Walzens in der Walzenanordnung auftretende Walzdruck liegt im Allgemeinen erheblich über diesem Regeldruck. Durch das Einführen des Walzgutes in den Walzspalt ergibt sich ein plötzlicher Druck- oder Kraftanstieg zwischen den Walzen, der zur Folge hat, dass das Walzgut dicker aus dem Walzenspalt austritt, als es seiner vorherigen Einstellung entspricht. Um dies auszugleichen, wird der Walzenspalt über einen Keil auf die gewünschte Walzgutdicke eingestellt. Dieser Keil nimmt die Belastung auf, so dass die Belastung im Walzenspalt weiterhin Null bleibt. Es hat sich gezeigt, dass mit dieser Regelung nur ein verhältnismäßig eng begrenzter Regelbereich beherrscht werden kann und sich außerdem nach wie vor unerwünschte Einwirkungen auf die Dicke des Walzgutes ergeben, die sich bezüglich der Dickenabweichungen nachteilig auswirken, weil eine nur verhältnismäßig langsam reagierende Regelung stattfindet.

Um dieses zu verbessern, schlägt die DE 22 64 333 C3 vor, auch die an den Walzenzapfen vorgesehenen Rückbiegelager mit deren Abstand erfassenden Weggebem auszustatten und die auf die Rückbiegezylinder einwirkenden Regeleinrichtungen mit einem Regelkreis zu versehen, mit dem überlagerte, durch Sollwerte und/oder Stützkräfte bestimmte Abstände konstant gehalten werden.

Weiter beschreibt die DE 199 24 860 A1 eine Walzenanordnung, bei welcher der Abstand zwischen einem hydrostatischen Drucklager und einer Walze auch im Übergangszustand vor und nach Beginn des Walzens immer aufrechterhalten werden kann, um so Schäden an diesen Bauteilen aufgrund eines Kontaktes miteinander zu vermeiden. Es sind hydrostatische Drucklager zum berührungsfreien Abstützen von Zylinderabschnitten von Leerlaufwalzen mit Fluiddruck im Wesentlichen längs der Horizontalrichtung vorgesehen, wobei diese Leerlaufwalzen die Arbeitswalzen im Wesentlichen längs der Horizontalrichtung abstützen. Dabei sind Spalthaltewalzen vorgesehen, die verhindern, dass die Spalte zwischen den hydrostatischen Drucklagern und den Leerlaufwalzen kleiner als ein vorgegebener Wert werden.

Aus der DE 103 05 511 3 ist es bekannt, auf Walzenzapfen jeweils innenliegende Lagerblöcke in Lagersteinen anzuordnen.

Weitere Walzenanordnungen sind aus der CN 201 175 719 Y, der JP 2000 133251 A und der WO 2004/026498 A1 bekannt.

Schwierig wird es, wenn die Warenbahn in Bezug auf die Kalanderbaugröße einen kritischen Wert unterschreitet, d.h. wenn besonders dünne Materialien mit einer Dicke von weniger als 1 mm mit hoher Dichte und hoher Steifigkeit zu verarbeiten sind. Bei herkömmlichen Walzenanordnungen besteht dann die Gefahr, dass, wenn der Kalander über einen dünnen Bereich oder eine Unterbrechung fährt, die vorgespannten mechanischen Elemente, wie Lager, Lageraufnahmen, Walzen, Walzenzapfen, durch ihre Federvorspannungen aufeinander fallen und es so zu lokalen Überlastungen der Walzenoberflächen oder der Materialbahn kommt.

Besondere Probleme ergeben sich in dem Fall, dass die Warenbahn während des Durchfahrens des Walzenspaltes unterschiedliche Dicken aufweist. Das kann dann der Fall sein, wenn Warenbahnen intermittierend beschichtet sind, kaschiert sind oder aus mehreren Lagen bestehen. Ein Beispiel sind beschichtete Aluminium- oder Kupferfolien zur Herstellung von Lithiurm-Ionen-Batterien. Hier muss eine exakte Verdichtung über die gesamte Arbeitsbreite mikrometergenau gewährleistet sein. Wenn dies gelingt, wird hierdurch einerseits der Kontakt zwischen den Partikeln in den Elektrodenmaterialien verbessert und der Elektronentransport optimiert, andererseits wird auch die Volumenleistungsdichte der Batterien erhöht.

Das Problem der Herstellung von walzenverdichteten Elektrodenmaterialien ist beispielsweise in der JP 2000/133 251 A angesprochen. Dabei wird ein Walzenpaar, dessen Mittenabstand der Walzen variabel ist, mit hydraulischen Zylindern beaufschlagt, die einen vorab festgesetzten Druck in eine Richtung ausüben, um den Walzenabstand zu verringern. Dabei werden Kompensationszylinder für die Walzendurchbiegung vorgesehen, und die paarigen Walzen sind jeweils so geformt, dass sie in einem Mittelbereich einen etwas größeren Durchmesser haben, als an beiden Enden.

Das Geschwindigkeitsproblem beim Kalandrieren von Warenbahnen variierender Dicke wird in der JP 2000/079407 A angesprochen. Eine obere Walze und eine untere Walze sind frei drehbar in Lagerblöcken gehalten, auf die hydraulische Zylinder wirken. Diese hydraulischen Zylinder drücken die obere Walze nach unten, die untere Walze nach oben. Auf unabhängige Hilfslager an den jeweiligen Walzen werden Gegenbiegekräfte ausgeübt.

Es ist die Aufgabe der vorliegenden Erfindung, eine kompakt aufgebaute Walzenanordnung mit einer Einrichtung zur Regelung des Walzenspaltes sowie ein entsprechendes Verfahren zur Verfügung zu stellen, mit der insbesondere intermittierend beschichtete Folien präzise kalandriert werden können.

Diese Aufgabe wird von einer Walzenanordnung nach Anspruch 1 sowie einem Verfahren nach Anspruch 4 gelöst. Vorteilhafte Ausgestaltungen sind Gegenstand der jeweils rückbezogenen Unteransprüche.

Erfindungsgemäß ist bei einer Walzenanordnung der eingangs genannten Gattung vorgesehen, dass der auf dem Walzenzapfen jeweils innenliegende Lagerblock in einem Lagerstein angeordnet ist und der erste Hebelarm einer Spannbrille der oberen Walze und der erste Hebelarm einer Spannbrille der unteren Walze starr miteinander verbunden sind und der zweite Hebelarm der Spannbrille der oberen Walze und der zweite Hebelarm der Spannbrille der unteren Walze durch das erste Stellelement gekoppelt sind das zweite Stellelement zwischen den sich gegenüberstehenden Lagersteinen der oberen Walze und der unteren Walze angeordnet ist, wobei die Lagersteine durch das zweite Stellelement miteinander verbunden sind. Es ist eine Steuerung vorhanden, die auf die ersten Stellelemente und die zweiten Stellelemente wirkt, wodurch die ersten Stellelemente so verfahren werden, dass der Walzenspalt entsprechend einer vorab festgelegten Zustellung und einer vorab festgelegten Linienlast einstellt wird und die zweiten Stellelemente so verfahren werden, dass die Lagersteine in einer relativen Ruhelage gehalten werden, die durch eine festgelegte Verdichtung einer durch den Walzenspalt laufenden Warenbahn definiert ist.

Der Walzenspalt wird somit zunächst entsprechend der erforderlichen Zustellung und der erforderlichen Linienlast eingestellt. Dies geschieht, indem die Spannbrillen jeweils über ein Stellelement zugestellt werden. Gleichzeitig legen sich aber die Lagersteine mit den Lagern auf den Zapfen auf die ersten Stellelemente ab, die beispielsweise abhängig von der Information aus einem Wegmesssystem die Lagersteine in Ruhelage relativ zueinander halten. Der Abstand der Lagersteine wird dabei so lange zugestellt, bis die erforderliche Warenbahnverdichtung erreicht ist.

Durch das Aufbringen der Lasten in die einzelnen Einleitungspunkte werden die Lagerschalen oder Wälzkörper spielfrei geschoben und mit einer Lochleibung in sich vorgespannt. Zusätzlich verformen sich die Walzen federelastisch. Dies geschieht konstruktionsbedingt zum hauptsächlichen Teil in den Übergängen von den Zapfen zum Ballen und zum vernachlässigbar kleinen Teil in den Ballen selbst, da diese im Durchmesser passend gewählt ist.

Nach einer vorteilhaften Ausgestaltung ist das erste Stellelement und/oder das zweite Stellelement als hydraulisch arbeitendes Stellelement, als pneumatisch arbeitendes Stellelement oder als elektrisch betriebenes mechanisch arbeitendes Stellelement ausgebildet. Beispielsweise kann die erforderliche Last über einen hydraulischen oder pneumatischen Zylinder oder über eine Spindelzustellung eingeleitet werden. Die Konstruktion ist so ausgeführt, dass die Spannbrillen die Last nach dem Hebelgesetz in den Zapfen einleiten. Die Spannbrillen, die Lagersteine bzw. die Walzenzapfen sind mit einem Wegmesssystem verknüpft, welches über ein Programm und entsprechende Antriebe, wie hydraulische Zylinder oder elektrische Hubgetriebe, die Lage der Walzenzapfen erkennt und konstant hält.

Ändert sich das Kraftaufkommen im Walzenspalt durch unterschiedliche Materialdicken in der Warenbahn, insbesondere durch eine intermittierend ausgebildete Beschichtung, so werden die ersten Stellelemente der Lagersteine hochgefahren. Dies erfolgt derart, dass die Walzendurchbiegung, die durch die vorher größere Linienlast hervorgerufen wurde, nun durch diese eingeleitete Ersatzlast erhalten bleibt. Die Regelung erfolgt derart, dass eine Schwingungsanregung nicht entsteht, da das Walzenpaar in dessen Verformungszustand verweilt. Walzen biegen sich aufgrund von Prozesskräften im Walzenspalt durch. Die so erzeugten Kantenkräfte auf die Lagerung verkürzen deren Lebensdauer erheblich.

Vorteilhaft weist ein Lagerblock daher eine schwenkbare Lagerschale auf, in dem die enthaltenen Lager um eine gemeinsame Achse schwenkbar angeordnet sind. Somit ist die Lagerung entsprechend der Belastungsrichtung in den Freiheitsgraden durch sphärische Aufnahmen so freigestellt, dass es zu keiner übergroßen Belastung kommt. Die gesamte Lagerung folgt der durch das Durchbiegen der Walzen hervorgerufenen Kippbewegung, ein Entstehen unerwünschter Kantenkräfte auf die Lagerblöcke wird verhindert.

Außerdem wird dafür gesorgt, dass die Lagervorspannung stets in der gleichen Richtung erhalten bleibt, so dass ein Durchspringen der Lagerelastizität vermieden wird.

Im Folgenden soll die Erfindung anhand der beigefügten Zeichnung näher erläutert werden. Es zeigt:
- Figur 1: eine perspektivische Ansicht einer Walzenanordung mit einer Einrichtung zur Regelung des Walzenspaltes gemäß einer Ausführungsform der Erfindung;
- Figur 2: eine Schnittdarstellung der Walzenlagerung und der Walzenzustellung;
- Figur 3: eine Schnittdarstellung entlang der Linie A-A aus Figur 2.

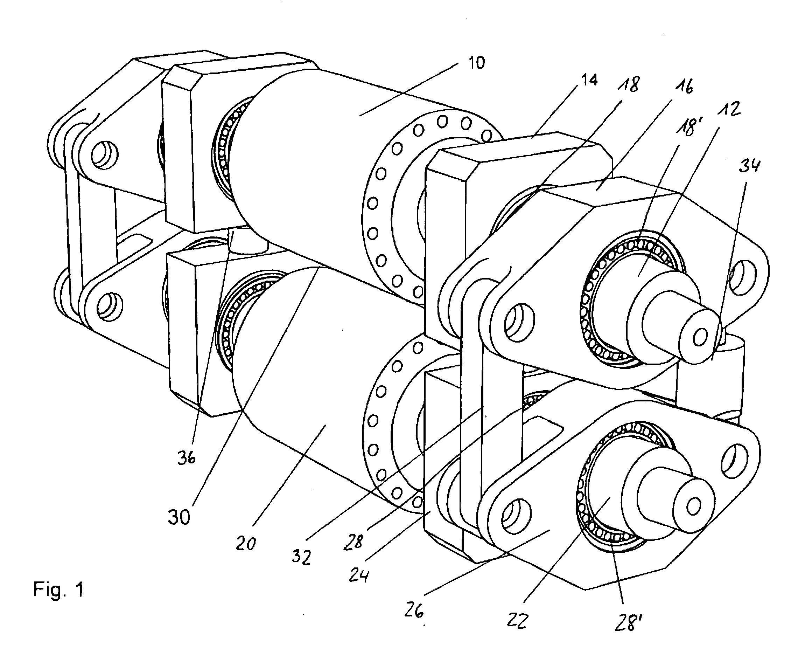

Figur 1 zeigt eine perspektivische Ansicht einer Walzenanordnung mit einer Einrichtung zur Regelung des Walzenspaltes gemäß einer Ausführungsform der vorliegenden Erfindung. Die Walzenanordnung ist symmetrisch in Bezug auf eine Ebene, die senkrecht zu den Achsen der oberen Walze 10 und der unteren Walze 20 verläuft, so dass im Wesentlichen nur der Teil der Walzenanordnung beschrieben wird, der, ausgehend von dieser Ebene, dem Betrachter zugewandt ist. Die Anordnung und Ausgestaltung der Komponenten auf der dem Betrachter abgewandten Seite ist dann entsprechend gewählt und wird aufgrund der spiegelbildlichen Ausgestaltung nicht eingehend diskutiert, um Wiederholungen zu vermeiden.

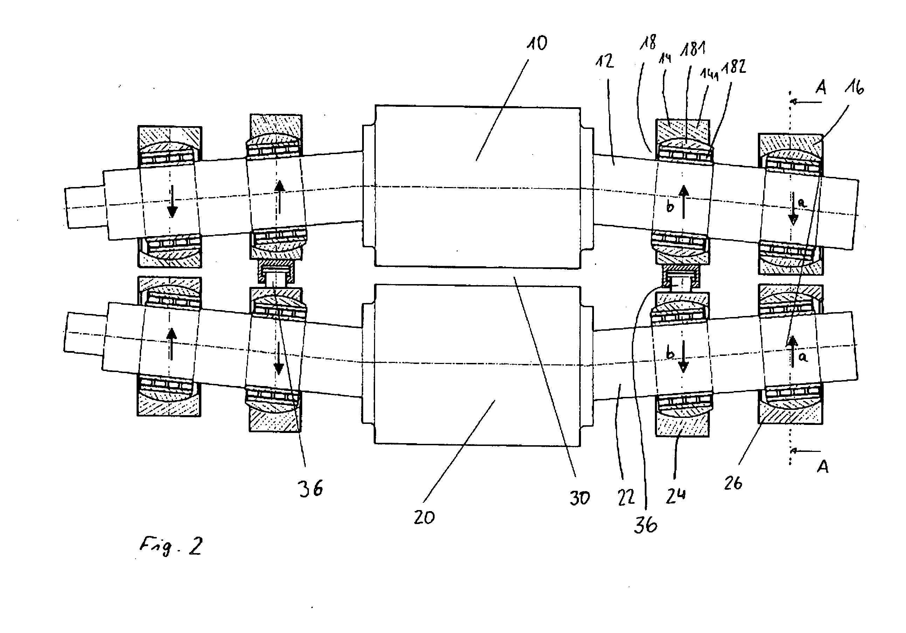

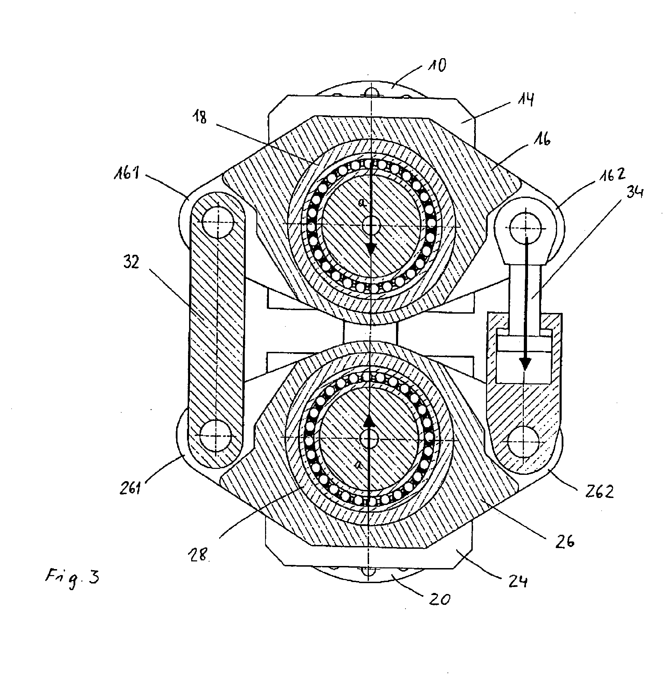

Die Walzenanordnung gemäß Figur 1 umfasst ein Walzenpaar, das aus einer oberen Walze 10 und einer unteren Walze 20 besteht, zwischen denen ein Walzenspalt ausgebildet ist. Die obere Walze 10 weist zwei axial diametral gegenüberstehende Walzenzapfen 12 auf, die jeweils in zwei Lagerblöcken 18, 18' aufgenommen sind, welche im Zusammenhang mit der Figur 2 noch weiter beschrieben werden. Der innenliegende, näher an der oberen Walze 10 angeordnete Lagerblock 18 ist in einem Lagerstein 14 angeordnet, der weiter außenliegende Lagerblock 18'in einer Spannbrille 16. Ganz entsprechend umfasst die untere Walze 20 zwei diametral einander gegenüberstehende Walzenzapfen 22, die in zwei Lagerblöcken 28, 28' aufgenommen ist. Dabei ist der auf dem Walzenzapfen 22 innenliegende Lagerblock 28 in einem Lagerstein 24 angeordnet und der auf dem Walzenzapfen 22 außenliegende Lagerblock 28' in einer Spannbrille 26 angeordnet. Bei der Walzenanordnung stehen sich nun einander entsprechende Lagersteine 14, 24 und Spannbrillen 16, 26 von oberer Walze 10 und unterer Walze 20 gegenüber. Die Spannbrille 16 der oberen Walze 10 ist mit der Spannbrille 26 der unteren Walze 20 einerseits über einen Zuganker 32 fest verbunden und andererseits über ein erstes Stellelement 34 gekoppelt, wobei die Funktion dieser Kopplung im Zusammenhang mit der Figur 3 näher erläutert wird. Die sich gegenüberstehenden Lagersteine 14, 24 der oberen Walze 10 und der unteren Walze 20 sind über ein zweites Stellelement 36 miteinander verbunden.

Figur 2 zeigt eine Schnittdarstellung der Walzenlagerung und der Walzenzustellung gemäß Figur 1. Jeder Lagerblock 18 umfasst eine Lagerschale 181, in dem eine Anzahl von Lagern 182 angeordnet ist, wobei die Lagerschale 18 um eine Achse schwenkbar ist. Durch diese Art der Lagerung werden die Walzenzapfen 12, 22 sphärisch abgefangen.

Beim Start der Anlage ist zunächst eine Ausrichtung der Wälzlager nötig, um eine Kantenbelastung der Wälzlager zu vermeiden. Dieses geschieht durch ein Pulsen der Walzenzustellung. Die inneren Lagerblöcke (14) werden wechselnd mit der Spaltzustellung und mit einer kleinen Überlast frequentiert. Dieses geschieht derart, dass sich die Reibung zwischen der Lagerschale 181 und dem Fuß 141 beispielsweise des Lagersteins 14 reduziert, und sich die Elemente durch ihren symmetrischen Aufbau senkrecht zur jeweiligen Kraftflusslinie a oder b ausrichten.

Entsprechende Maßnahmen sind für die Lagerung eines Lagerblockes innerhalb einer Spannbrille, z.B. 16, getroffen.

Die Regelung des Walzenspaltes 30 geschieht nun in zwei voneinander getrennten Schritten. Zunächst einmal werden die Spannbrille 16 der oberen Walze 10 und die Spannbrille 26 der unteren Walze 20 in Richtung der Pfeile a aufeinander zu bewegt, so dass ein Walzenspalt 30 entsprechend einer vorab festgelegten Zustellung und einer vorab festgelegten Linienlast eingestellt wird.

Figur 3 zeigt in einer Schnittansicht entlang der Linie A-A aus Figur 2 Einzelheiten dazu. Die Spannbrille 16 der oberen Walze 10 weist einen ersten Hebelarm 161 und einen zweiten Hebelarm 162 auf, die beidseitig des Lagerblockes 18 ausgebildet sind. Entsprechend weist die Spannbrille 26 der unteren Walze 20 einen ersten Hebelarm 261 und einen zweiten Hebelarm 262 auf, die auf beiden Seiten des Lagerblockes 28 ausgebildet sind. Der erste Hebelarm 161 der ersten Spannbrille 16 ist mit dem ersten Hebelarm 261 der zweiten Spannbrille 26 über einen Zuganker 32 fest verbunden. Der zweite Hebelarm 162 der Spannbrille 16 ist mit dem zweiten Hebelarm 162 der Spannbrille 26 über ein erstes Stellelement 34 verbunden, das bei der dargestellten Ausführungsform als hydraulischer Zylinder ausgebildet ist. Wenn durch einen geeigneten Antrieb der Kolben in Richtung des Pfeils in den Zylinder hinein bewegt wird, werden die Spannbrille 16 und die Spannbrille 26 in Richtung der Pfeile a aufeinander zu bewegt, mit ihnen die obere Walze 10 und die untere Walze 20, so dass ein Walzenspalt entsprechend den Vorgaben eingestellt wird.

Zurück zur Figur 2 wird nun erläutert, wie die Gegenbiegekräfte erzeugt werden. Dazu ist zwischen einem Lagerstein 14 der oberen Walze und einem Lagerstein 24 der unteren Walze 20 ein zweites Stellelement 36 vorgesehen, das bei der vorstehenden Ausführungsform wiederum als hydraulischer Zylinder ausgebildet ist. Das zweite Stellelement 36 sorgt dafür, dass die Lagersteine 14, 24 in einer relativen Ruhelage zueinander gehalten werden, die durch eine festgelegte Verdichtung einer durch den Walzenspalt 30 laufenden Warenbahn definiert ist.

Alle Stellelemente sind bei dieser Ausführungsform der Walzenanordnung gemäß der vorliegenden Erfindung hydraulisch. Grundsätzlich ist auch eine mechanische Kompensierung denkbar, die aber wegen der hohen auftretenden Linienspannungen in der Größenordnung von 6 t/cm nicht realisiert werden kann. Bei Walzen und Nockenscheiben wäre die Flächenpressung so hoch, dass ein enormer Verschleiß zu erwarten wäre. Außerdem kann die erforderliche Walzenspaltgenauigkeit von 1 µ nicht damit gehalten werden. Die Hydraulik ist sehr scharf und kann sehr schnell arbeiten. Derartige hydraulische Antriebe sind aus dem Flugzeugbau bekannt. Hier würden herkömmliche SPS-Steuerungen nicht funktionieren, da sie zu langsam sind. Bei der Walzenanordnung gemäß der vorliegenden Erfindung geschieht die Steuerung daher direkt aus einem Computerprogramm heraus.

Die Walzenanordnung gemäß der vorliegenden Erfindung ist in einem Kalanderstuhl angebracht. Für den Antrieb der Walzen werden Zyklomotoren eingesetzt, die sich durch eine hohe Spielfreiheit auszeichnen. Bei der Verwendung als Glättwerk wird im Regelfall dafür gesorgt, dass die obere Walze eine größere Umfangsgeschwindigkeit hat als die untere Walze.

Alle Leitungen, die hydraulisches Fluid transportieren, sind mit großem Querschnitt ausgestaltet, um die innere Reibung so klein wie möglich zu halten. Wenn erforderlich, wird für einen Druckausgleich mit Zylinder gesorgt.

Die Walzen sind, je nach Anwendungsfall, hochvergütet, gehärtet, hartverchromt und hochglanzpoliert; auch eine Karbidbeschichtung kann zweckmäßig sein.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: obere Walze
- 12: Walzenzapfen
- 14: Lagerstein
- 16: Spannbrille
- 18: Lagerblock
- 20: untere Walze
- 22: Walzenzapfen
- 24: Lagerstein
- 26: Spannbrille
- 28: Lagerblock
- 30: Walzenspalt
- 32: Zuganker
- 34: erstes Stellelement
- 36: zweites Stellelement
- 141: Fuß
- 161: erster Hebelarm
- 162: zweiter Hebelarm
- 181: Lagerschale
- 182: Lager
- 261: erster Hebelarm
- 262: zweiter Hebelarm

## Patentansprüche

1. Walzenanordnung mit einer Einrichtung zur Regelung des Walzenspaltes, umfassend
- ein Walzenpaar, das aus einer oberen Walze (10) und einer unteren Walze (20) besteht, zwischen denen ein Walzenspalt (30) ausgebildet ist, wobei jede Walze (10, 20) mit zwei axial diametral gegenüberstehenden Walzenzapfen (12; 22) versehen ist;
- mindestens zwei Lagerblöcke (18, 18'; 28, 28') für jeden Walzenzapfen (12; 22), wobei in einem Lagerblock ein oder mehrere Lager aufgenommen sind; und
- einen auf dem Walzenzapfen jeweils außenliegenden Lagerblock (18', 28') in einer Spannbrille (16; 26), die einen ersten Hebelarm (161, 261) und einen zweiten Hebelarm (162, 262) aufweist,
wobei
- der zweite Hebelarm (162) der jeweiligen Spannbrille (16) der oberen Walze (10) und der zweite Hebelarm (262) der jeweiligen Spannbrille (26) der unteren Walze (20) über ein erstes Stellelement (34) miteinander verbunden sind;
- der zweite Hebelarm (162) der Spannbrille (16) der oberen Walze (10) und der zweite Hebelarm (262) der Spannbrille (26) der unteren Walze (20) durch das erste Stellelement (34) gekoppelt sind ;
- einander entsprechende Lagersteine (14, 24) und Spannbrillen (16, 26) von oberer Walze (10) und unterer Walze (20) sich gegenüberstehen; und
- eine Steuerung, die auf das erste und das zweite Stellelement (34, 36) wirkt, **dadurch gekennzeichnet, dass**
- der auf dem Walzenzapfen jeweils innenliegende Lagerblock (18, 28) in einem Lagerstein (14; 24) angeordnet ist und
- der erste Hebelarm (161) der Spannbrille (16) der oberen Walze (10) und der erste Hebelarm (261) der Spannbrille (26) der unteren Walze (20) starr miteinander verbunden sind und
- das zweite Stellelement (36) zwischen den sich gegenüberstehenden Lagersteinen (14, 24) der oberen Walze (10) und der unteren Walze (20) angeordnet ist, wobei die Lagersteine (12, 14) durch das zweite Stellelement miteinander verbunden und in einer relativen Ruhelage zu halten sind.

2. Walzenanordnung nach Anspruch 1, **dadurch gekennzeichnet, dass** das erste Stellelement (34) und/oder das zweite Stellelement (36) als hydraulisch arbeitendes Stellelement, als pneumatisch arbeitendes Stellelement oder als elektrisch betriebenes mechanisch arbeitendes Stellelement ausgebildet ist.

3. Walzenanordnung nach Anspruch 1, **dadurch gekennzeichnet, dass** ein Lagerblock ein schwenkbares Lagergehäuse aufweist, in dem die enthaltenen Lager um eine gemeinsame Achse schwenkbar angeordnet sind.

4. Verfahren zur Regelung des Walzenspaltes in einer Walzenanordnung gemäß Anspruch 1,
**dadurch gekennzeichnet, dass** das Verfahren folgende Schritte aufweist:
a) Verfahren der ersten Stellelemente (34), so dass der Walzenspalt (30) entsprechend einer vorab festgelegten Zustellung und einer vorab festgelegten Linienlast eingestellt wird; und
b) Verfahren der zweiten Stellelemente (36), so dass die Lagersteine (14, 24) in einer relativen Ruhelage gehalten werden, die durch eine festgelegte Verdichtung einer durch den Walzenspalt (30) laufenden Warenbahn definiert ist.

## Claims

1. A roll arrangement having a device for regulating the roll nip, comprising
- a roll pair which consists of an upper roll (10) and a lower roll (20), between which a roll nip (30) is formed, wherein each roll (10, 20) is provided with two roll journals (12; 22) which lie axially diametrically opposite one another;
- at least two bearing blocks (18, 18'; 28, 28') for each roll journal (12; 22), wherein one or more bearings are received in a bearing block; and
- a bearing block (18', 28'), which lies in each case on the outside on the roll journal, in a clamping latch (16; 26) which has a first lever arm (161, 261) and a second lever arm (162, 262),
wherein
- the second lever arm (162) of the respective clamping latch (16) of the upper roll (10) and the second lever arm (262) of the respective clamping latch (26) of the lower roll (20) are connected to one another via a first actuating element (34);
- the second lever arm (162) of the clamping latch (16) of the upper roll (10) and the second lever arm (262) of the clamping latch (26) of the lower roll (20) are coupled to one another by means of the first actuating element (34);
- mutually corresponding bearing jewels (14, 24) and clamping latches (16, 26) of the upper roll (10) and the lower roll (20) lie opposite one another; and
- a controller which acts on the first and the second actuating element (34, 36),
**characterized in that**
- the bearing block (18, 28) which lies in each case on the inside on the roll journal is arranged in a bearing jewel (14; 24), and
- the first lever arm (161) of the clamping latch (16) of the upper roll (10) and the first lever arm (261) of the clamping latch (26) of the lower roll (20) are connected rigidly to one another, and
- the second actuating element (36) is located between the bearing jewels (14, 24), which lie opposite one another, of the upper roll (10) and the lower roll (20), wherein the bearing jewels (14, 24) are connected to one another via the second actuating element and are held in a relative rest position

2. The roll arrangement of claim 1, **characterized in that** the first actuating element (34) and/or the second actuating element (36) are embodied as a hydraulically operating actuating element, a pneumatically operating element or a mechanically operating element which is electrically driven.

3. The roll arrangement of claim 1, **characterized in that** a bearing block comprises a pivoted bearing housing in which the bearings accommodated therein are arranged pivotally about a common axis.

4. A method for regulating the roll nip in a roll arrangement of claim 1,
**characterized in that** the method comprises the following steps:
a) moving the first actuating elements (34) to adjust the roll nip (30) according to a predetermined thrust and a predetermined linear load; and
b) moving the second actuating elements (36) to maintain the bearing jewels (14, 24) in a relative rest position which is defined by specified densification of a material web passing the roll nip.

## Revendications

1. Dispositif à rouleaux avec un dispositif de régulation de l'interstice entre les rouleaux, comprenant :
- une paire de rouleaux constituée d'un rouleau supérieur (10) et d'un rouleau inférieur (20), entre lesquels est formé un interstice de rouleaux (30), chaque rouleau (10, 20) étant muni de deux axes de rouleaux (12 ; 22) diamétralement opposés axialement ;
- au moins deux blocs de paliers (18, 18' ; 28, 28') pour chaque axe de rouleau (12 ; 22), un ou plusieurs paliers étant logés dans un bloc de palier ; et
- un bloc de palier extérieur (18', 28') sur l'axe de rouleau dans une lunette de serrage (16 ; 26), qui comprend un premier bras de levier (161, 261) et un deuxième bras de levier (162, 262),
- le deuxième bras de levier (162) du dispositif de serrage (16) du rouleau supérieur (10) et le deuxième bras de levier (262) de la lunette de serrage (26) du rouleau inférieur (20) étant reliés entre eux par l'intermédiaire d'un premier élément de réglage (34) ;
- le deuxième bras de levier (162) de la lunette de serrage (16) du rouleau supérieur (10) et le deuxième bras de levier (262) de la lunette de serrage (26) du rouleau inférieur (20) étant couplés par le premier élément de réglage (34) ;
- des rubis (14, 24) et des lunettes de serrage (16, 26) correspondants du rouleau supérieur (10) et du rouleau inférieur (20) se font face ; et
- un dispositif de commande qui agit sur le premier et le deuxième élément de réglage (34, 36),
**caractérisé en ce que**
- le bloc de palier interne (18, 28) sur l'axe de rouleau se trouve dans un rubis (14 ; 24) et
- le premier bras de levier (161) de la lunette de serrage (16) du rouleau supérieur (10) et le premier bras de levier (261) de la lunette de serrage (26) du rouleau inférieur (20) sont reliés entre eux de manière rigide et
- le deuxième élément de réglage (36) est disposé entre les rubis (14, 24) opposés du rouleau supérieur (10) et du rouleau inférieur (20), les rubis (12, 14) étant reliés entre eux par le deuxième élément de réglage et devant être maintenus dans une position de repos relative.

2. Dispositif à rouleaux selon la revendication 1, **caractérisé en ce que** le premier élément de réglage (34) et/ou le deuxième élément de réglage (36) est conçu comme un élément de réglage hydraulique, un élément de réglage pneumatique ou un élément de réglage électrique.

3. Dispositif à rouleaux selon la revendication 1, **caractérisé en ce qu'**un bloc de palier comprend un boîtier de palier pivotant dans lequel les paliers qui y sont contenus sont disposés de manière pivotante autour d'un axe commun.

4. Procédé de régulation de l'interstice entre les rouleaux dans un dispositif à rouleaux selon la revendication 1,
**caractérisé en ce que** le procédé comprend les étapes suivantes :
a) déplacement des premiers éléments de réglage (34), de façon à ce que l'interstice entre les rouleaux (30) soit réglé en fonction d'une avance prédéterminée et d'une charge linéaire prédéterminée ; et
b) déplacement des deuxièmes éléments de réglage (36), de façon à ce que les rubis (14, 24) soient maintenus dans une position de repos relative, qui est définie par une compression déterminée d'une bande de produit traversant l'interstice entre les rouleaux (30).
